# EUROPÄISCHE PATENTSCHRIFT

(11) **EP 1 007 191 B1**
(45) Veröffentlichungstag und Bekanntmachung des Hinweises auf die Patenterteilung: **24.07.2002**
(21) Anmeldenummer: 98954196.6
(22) Anmeldetag: 18.09.1998
(51) Int. Cl.: B01D 53/94, B01F 5/06, F01N 3/28

(54) **STATISCHER MISCHER**
STATIC MIXER
MIXEUR STATIQUE

(30) Priorität: 18.09.1997 DE 19741199
(43) Veröffentlichungstag der Anmeldung: 14.06.2000
(73) Patentinhaber: SIEMENS AKTIENGESELLSCHAFT, 80333 München (DE)
(72) Erfinder: HOFMANN, Lothar, D-96264 Altenkunstadt (DE); MATHES, Wieland, D-96247 Michelau (DE); KLUMPP, Udo, D-96257 Marktgraitz (DE)
(86) Internationale Anmeldenummer: DE9802780
(87) Internationale Veröffentlichungsnummer: WO9913972

(56) Entgegenhaltungen:
- EP-A- 0 046 455
- EP-A- 0 247 965
- EP-A- 0 579 415
- US-A- 5 177 961
- US-A- 5 431 893

## Beschreibung

Die Erfindung bezieht sich auf die Verwendung eines Streckgitters im Strömungskanal einer Abgasreinigungsanlage eines mit Luftüberschuß betriebenen Verbrennungsmotors.

Zur Vermeidung der im Abgas eines Verbrennungsmotors enthaltenen Schadstoffe, im besonderen der Stickoxide, hat *sich* das Prinzip des geregelten oder gesteuerten Dieselkatalysators (GDK) als vorteilhafte Technik erwiesen. Diese Technik wird vor allem bei Verbrennungsmotoren, die mit Luftüberschuß betrieben werden, wie z.B. bei Diesel- und Magermotoren, eingesetzt. Bei dieser im wesentlichen auf dem Verfahren der selektiven katalytischen Reduktion (SCR) beruhenden Technik werden die Stickoxide zusammen mit einem Reduktionsmittel an einem selektiven Katalysator kontaktiert und dort zu unbedenklichem Stickstoff und zu wasser umgesetzt.

Eine nach diesem Prinzip arbeitende Abgasreinigungsanlage wird unter der Bezeichnung SiNOx-Abgasreinigungssystem von der Firma Siemens AG, Berlin und München, Deutschland, vertrieben (Firmenbroschüre "SINOx Stickoxidminderung für stationäre Dieselmotoren', Bestell-Nr. A96001-U91-A232). Mit einer solchen Anlage kann die Stickoxid-Emission eines Dieselmotors drastisch reduziert werden. Dabei werden die Stickoxide des Abgases mit dem Reduktionsmittel, üblicherweise aus Harnstoff durch Hydrolyse gewonnener Ammoniak, im Abgasrohr vermischt und zur katalytischen Umsetzung in einen Reaktionsraum mit einer Katalysator-Einrichtung geleitet. Zur Vermischung des Reduktionsmittels mit dem Abgas wird üblicherweise ein statischer Mischer eingesetzt, wie dieser z.B. aus der DE 43 13 393 A1 bekannt ist.

Zwar liefert der bekannte statische Mischer bezüglich einer homogenen Mischung des Reduktionsmittels mit dem Abgas bei einer derartigen reduktionsmittelbetriebenen Abgasreinigungsanlage bereits ein zufriedenstellendes Ergebnis. Da bei Fahrzeugen üblicherweise die Abgasrohrführung und damit die Führung des Strömungskanals entsprechend der Fahrzeugkonstruktion angepaßt werden muß, kann in vielen Anwendungsfällen aufgrund des fehlenden Einbauraumes die von diesem Mischer benötigte Mindestmischstrecke häufig nicht realisiert werden. In einem solchen Fall ergeben sich dann ungünstige Einströmverhältnisse in den den Katalysator enthaltenden Reaktionsraum mit der Folge eines ungleichmäßigen Strömungsprofils am Katalysatoreintritt.

Der Erfindung liegt daher die Aufgabe zugrunde, einen statischen Mischer im Strömungskanal einer derartigen Abgasreinigungsanlage anzugeben, der bei gleichzeitig möglichst kurzer Mischstrecke auch eine Strömungsrichtung, d.h. eine Ausrichtung der Strömung des Abgases im Strömungskanal, ermöglicht.

Diese Aufgabe wird erfindungsgemäß gelöst durch die Merkmale des Anspruchs 1. Dabei wird als statischer Mischer ein Streckgitter mit einer Anzahl von zwischen Stegen gebildeten Maschen in den Strömungskanal eingesetzt.

Das Streckgitter kann aus Kunststoff oder aus Metall bestehen, wobei letzteres auch als Streckmetall bezeichnet wird. Ein derartiges Streckgitter ist z. B. in dem Firmenprospekt "Strecken macht größer, Streckgitter" der Firma Ernst Sorst + Co., Hannover (DE) beschrieben und in vielfältiger Ausführung im Handel erhältlich. Aus der DE-C 32 08 634 ist es bekannt, ein Streckmetallblech als Träger für eine katalytische Substanz bei der Herstellung von Katalysatorplatten einzusetzen.

Das Streckgitter weist zusätzlich zur Funktion eines Mischers auch die Funktion eines Strömungsrichters auf. Beim Betrieb der Abgas- und Abgasreinigungsanlage wird aufgrund der durch das Streckgitter erzeugten Mischbewegung ein in die Abgasreinigungsanlage eingebrachtes Reduktionsmittel mit dem Abgas vermischt. Gleichzeitig beeinflußt das Streckgitter die Strömung hinsichtlich einer gezielten Ausrichtung stets zumindest annähernd parallel zur Längsachse oder Symmetrieachse des Strömungskanals. Unterstützt durch eine geeignete Anordnung des Streckgitters werden insbesondere infolge vorgegebener Einbauverhältnisse hervorgerufene ungünstige Strömungsprofile innerhalb des Strömungskanals in besonders einfacher und effektiver Weise aufgehoben und die Strömung vergleichmäßigt.

Das Streckgitter füllt zweckmäßigerweise den gesamten Rohrquerschnitt des Strömungskanals aus und weist einen freien Querschnitt von 25% bis 85% auf. Das Streckgitter kann je nach Anwendungsfall fein- oder grobmaschig sowie als Langstegstreckgitter ausgebildet sein. Dabei erfolgt der Einbau des Streckgitters zweckmäßigerweise senkrecht zur Längs- oder Rohrachse des Strömungskanals oder unter einem Neigungswinkel gegenüber dem senkrechten Einbau von bis zu 45%.

Bei einer Umströmung der Gitterknoten oder Knotenpunkte des Streckgitters werden Wirbel und Turbulenzen erzeugt, die die Mischung hervorrufen. Gleichzeitig richten die Stege des Streckgitters die Strömung des Abgases oder des bereits mit Reduktionsmittel beaufschlagten Abgases entsprechend deren Anstellwinkel aus. Mit zunehmendem Verhältnis zwischen der Stegbreite und der Stegdicke wird ein zunehmender Effekt der Strömungseinrichtung ausgebildet. Mit abnehmendem Verhältnis ergibt sich demgegenüber ein verstärkter Mischeffekt. Ein besonders bevorzugter Bereich des Verhältnisses zwischen Stegbreite und Stegdicke wurde zwischen 0,5 und 5 gefunden.

Das Streckgitter kann mit weiteren Streckgittern nach Art eines Lagenpaketes zusammengefaßt sein. Auch können mehrere einzelne Streckgitter oder Streckgitter-Lagenpakete bezogen auf die Strömungsrichtung des Abgases hintereinander angeordnet sein. Dabei ist der Abstand zwischen benachbarten Lagen vorzugsweise kleiner oder gleich dem 5-fachen des Durchmessers des Strömungskanals.

Bei einer Eindüsung von üblicherweise wäßrigem Reduktionsmittel in den Einströmkanal ist vorteilhafterweise bezogen auf die Strömungsrichtung des Abgases vor der Eindüsstelle mindestens eines der Streckgitter angeordnet. Dies ist besonders vorteilhaft, wenn die Eindüsung innerhalb eines Rohrbogens des Einströmkanals erfolgt, da im äußeren Bereich des Rohrbogens mehr Abgas strömt als im inneren Bereich. Die dadurch bedingten ungünstigen Strömungsverhältnisse im Rohrbogen führen normalerweise zu einer besonders ungleichmäßigen Beaufschlagung des Abgases mit dem strahlkegelförmig in den Einströmkanal eingebrachten Reduktionsmittel. Dieses ungünstige Strömungsprofil wird mittels des vorgeordneten Streckgitters vergleichmäßigt, so daß auch im Krümmungsbereich eine homogene Vermischung des Abgases mit dem Reduktionsmittel erfolgt. Zur weiteren Vergleichmäßigung des Strömungsprofils bei Eintritt des Abgas-Reduktionsmittel-Gemisches in den Reaktionsraum und damit unmittelbar vor dem Katalysator ist dort zweckmäßigerweise ein weiteres Streckgitter vorgesehen.

Bei Verwendung einer Anzahl von Streckgittern in mehreren Lagen oder Lagenpaketen erfolgt die Ausrichtung der Streckgitter zueinander zunächst im Hinblick auf eine besonders gute Mischung des Abgases mit dem Reduktionsmittel. Dabei dient die stromabwärts letzte Lage außerdem zur Strömungsrichtung entsprechend der nachfolgenden Rohr- oder Kanalführung. Bei mehreren Lagen werden vorzugsweise unterschiedliche Streckgitter mit verschiedenen Maschenöffnungen, Stegabmessungen und/oder Knotenabmessungen eingesetzt.

Die mit der Erfindung erzielten Vorteile bestehen insbesondere darin, daß durch Verwendung eines Streckgitters als statischer Mischer im Strömungskanal einer Abgasreinigungsanlage eines mit Luftüberschuß betriebenen Verbrennungsmotors einerseits bereits auf einer besonders kurzen Mischstrecke eine gute Durchmischung des Abgases mit einem Reduktionsmittel erreicht wird. Andererseits wird in besonders einfacher Weise auch eine Vergleichmäßigung der Strömung des Abgases und/oder eines Abgas-Reduktionsmittel-Gemisches aufgrund der zusätzlichen Funktion einer Strömungsrichtung des Streckgitters erzielt.

Ausführungsbeispiele der Erfindung werden anhand einer Zeichnung näher erläutert. Darin zeigen:
- FIG 1: schematisch eine Abgasreinigungsanlage mit Anordnung jeweils eines statischen Mischers vor und nach einer Eindüs-Einrichtung und mit einem SCR-Katalysator,
- FIG 2: im Ausschnitt einen Strömungskanal der Abgasreinigungsanlage gemäß FIG 1 mit einem darin geneigt angeordneten statischen Mischer,
- FIG 3: der statische Mischer in Form eines Streckgitters, und
- FIG 4: das Streckgitter in einer Seitenansicht entlang der Linie IV-IV gemäß FIG 3.

Einander entsprechende Teile sind in allen Figuren mit den gleichen Bezugszeichen versehen.

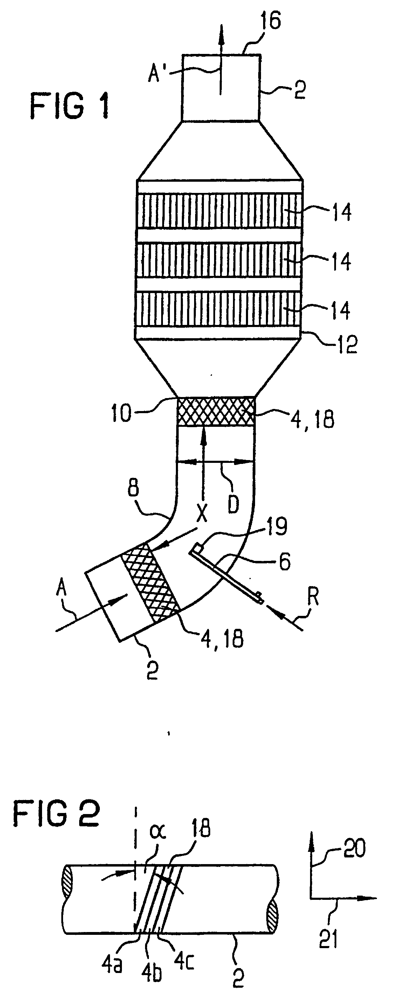

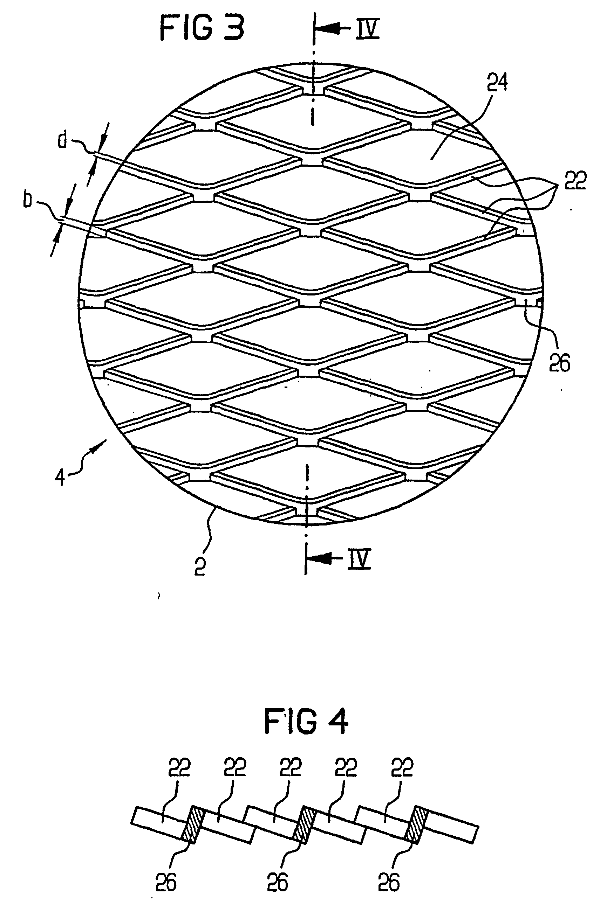

Nach FIG 1 wird von einem (nicht dargestellten) mit Luftüberschuß betriebenen Verbrennungsmotor, z.B. einem Dieselmotor, ein Abgas A abgegeben, daß (z.B. über einen nicht gezeigten Abgasturbolader) in einen Strömungskanal in Form eines Abgasrohres 2 geleitet wird. Im Abgasrohr 2 befindet sich ein statischer Mischer in Form eines in FIG 3 dargestellten Streckgitters 4. In Strömungsrichtung nachfolgend ist eine Eindüs-Einrichtung 6 für ein Reduktionsmittel R in einem Krümmungsbereich des Abgasrohres 2, d. h. in einem Rohrbogen 8 angeordnet. Bei diesem Reduktionsmittel R kann es sich um Ammoniak (NH₃), insbesondere aber um eine wäßrige Lösung von Harnstoff handeln. An einer Übergangsstelle 10 erweitert sich das Abgasrohr 2 zur Aufnahme eines Abgaskatalysators 12. Dieser kann z. B. gemäß der WO 97/01387 angeordnet und ausgeführt sein. Stromaufwärts dieser Übergangsstelle 10 - und damit vor dem Gehäuse des Abgaskatalysators 12 - ist im Ausführungsbeispiel ein weiterer statischer Mischer in Form ebenfalls eines Streckgitters 4 im Abgasrohr 2 angeordnet.

Der vorliegend drei hintereinander angeordnete SCR-Katalysator-Module 14 aufweisende Abgaskatalysator 12 dient der Beseitigung von Stickoxiden (NOₓ) im Abgas A. Das auf diese Weise gereinigte Abgas A' verläßt das Abgasrohr 2 über eine Austrittsöffnung 16.

Anstelle des oder jedes einzelnen Streckgitters 4 können jeweils auch Lagenpakete 18 (FIG 2) aus mehreren hintereinander gereihten Streckgittern 4 in das Abgasrohr 2 eingesetzt sein. Der Abstand x zwischen den einzelnen Streckgittern 4 bzw. zwischen den Lagenpaketen 18 ist zweckmäßigerweise kleiner als das 5-fache des Durchmessers D des Abgasrohres 2.

Gegenüber dem Stand der Technik hat sich der Einsatz des Streckgitters 4 als statischer Mischer in einer derartigen Abgasreinigungsanlage als Verbesserung einerseits der Strömungs- und Reduktionsmittel-Gleichverteilung und andererseits der Strömungsausrichtung innerhalb des Abgasrohres oder Strömungskanals 2 herausgestellt. So konnte bei der Verwendung des SINOx-Abgasreinigungssystems für ein Nutzfahrzeug, bei dem der Rohrbogen 8 des vom Fahrzeugmotor kommenden Abgasrohres 2 aufgrund des verfügbaren Einbauraums im Fahrzeug unmittelbar vor dem Abgaskatalysator 12 eingebaut werden mußte, durch den Einbau des Streckgitters 4 als Mischer bzw. als Strömungsrichter insbesondere vor dem Rohrbogen 8 eine nennenswerte Steigerung des NOx-Umsatzes festgestellt werden. Diese Steigerung gegenüber dem bekannten Mischer kann auf den Effekt der Strömungsrichtung durch das jeweilige Streckgitter 4 zurückgeführt werden, da der Rohrbogen 8 bekanntermaßen zur Ausbildung eines unsymmetrischen Strömungsprofils an der durch die Position der Eindüs-Einrichtung 6 bestimmten Eindüsstelie 19 und am Abgaskatalysator 12 führt.

Wie FIG 2 zeigt, kann das oder jedes Streckgitter 4 - bezogen auf die Querrichtung 20 des Abgasrohres 2 - auch unter einem Neigungswinkel α auf die Rohrlängsachse 21 zu geneigt angeordnet sein. Dabei beträgt der Neigungswinkel α vorzugsweise zwischen 0° und 45°. Das dargestellte Lagenpaket 21 ist im Ausführungsbeispiel aus drei Streckgitterlagen 4a bis 4c gebildet.

Die einzelnen Streckgitter 4 und/oder die innerhalb eines Lagenpaketes 18 eingesetzten Streckgitterlagen 4a bis 4c können auch verschiedenartig sein. So können innerhalb einer Abgasreinigungsanlage verschiedene der im vorgenannten Firmenprospekt dargestellten Streckgittertypen, wie z. B. Langstegstreckgitter und verformte oder plissierte Streckgitter, kombiniert werden.

Eine mögliche Ausführungsform des Streckgitters 4 ist in FIG 3 in perspektivischer Draufsicht und in FIG 4 in einer Seitenansicht dargestellt. Definitionsgemäß weist das Streckgitter 4 eine Anzahl von jeweils durch Stege 22 begrenzte Maschen 24 auf, durch die beim Betrieb der Abgasreinigungsanlage das Abgas A hindurchströmt. Dabei wird der Effekt der Strömungsrichtung im wesentlichen durch die Stegbreite b bestimmt, während die durch die Dicke des verwendeten Materials festgelegte Stegdicke d sowie die Länge und Breite der durch vier aneinanderstoßende Stege 22 gebildeten Knotenpunkte 26 den Effekt der Durchmischung bestimmen. Eine besonders gute Durchmischung und effektive Strömungsrichtung ergibt sich bei einem Verhältnis der Stegbreite b zur Stegdicke d im Bereich zwischen 0,5 und 5. Dabei sollte der durch die Summe der Öffnungen aller Maschen 24 gebildete freie Querschnitt zwischen 25% und 85% des Streckgitters 4 und damit der Querschnittsfläche πD²/4 des Abgasrohres 2 betragen.

## Patentansprüche

1. Verwendung eines Streckgitters (4) mit einer Anzahl von zwischen Stegen (22) gebildeten Maschen (24) ausschließlich als statischer Mischer und Strömungsrichter im Strömungskanal (2) einer Abgasreinigungsanlage eines mit Luftüberschuß betriebenen Verbrennungsmotors.

2. Verwendung nach Anspruch 1, wobei
der durch die Maschen (24) gebildete freie Querschnitt 25% bis 85% der Querschnittsfläche des Strömungskanals (2) beträgt.

3. Verwendung nach Anspruch 1 oder 2, wobei
das Streckgitter (4) gegenüber der zur Längsachse (21) des Strömungskanals (2) senkrechten Querrichtung (20) geneigt ist, wobei der Neigungswinkel 0° ≤ α ≤ 45° ist.

4. Verwendung nach einem der Ansprüche 1 bis 3, wobei
das Verhältnis der Stegbreite (b) zur Stegdicke (d) zwischen 0,5 und 5 beträgt.

5. Verwendung nach einem der Ansprüche 1 bis 4, wobei
eine Anzahl von Streckgittern (4a bis 4c) nach Art eines Lagenpakets (18) zusammengesetzt sind.

6. Verwendung nach einem der Ansprüche 1 bis 5, wobei
eine Anzahl von Streckgittern (4) oder Streckgitterlagen (18)- in Strömungsrichtung des Abgases (A) gesehen - hintereinander angeordnet sind.

7. Verwendung nach Anspruch 5 oder 6, wobei
der Abstand (x) zwischen benachbarten Lagen (4,18) kleiner oder gleich dem 5-fachen des Durchmessers (D) des Strömungskanals (2) ist.

8. Verwendung nach einem der Ansprüche 1 bis 7, wobei
das Streckgitter (4) - in Strömungsrichtung des Abgases (A) gesehen - vor einer Eindüsstelle (19) für ein Reduktionsmittel (R) der Abgasreinigungsanlage angeordnet ist.

9. Verwendung nach einem der Ansprüche 1 bis 7, wobei
- in Strömungsrichtung des Abgases (A) gesehen - ein erstes Streckgitter (4) vor einer Eindüsstelle (19) für ein Reduktionsmittel (R) der Abgasreinigungsanlage angeordnet ist, und daß ein zweites Streckgitter (4) hinter der Eindüsstelle (19) und vor einem Abgaskatalysator (12) angeordnet sind.

10. Verwendung nach einem oder mehreren der vorhergehenden Ansprüche, wobei
bei mehreren Lagen unterschiedliche Streckgitter (4) mit voneinander verschiedenen Abmessungen der Maschen (24), der Stege (22) und/oder der Knoten (26) vorgesehen sind.

11. Abgasreinigungsanlage für einen mit Luftüberschuß betriebenen Verbrennungsmotor mit einem Streckgitter (4) verwendet nach einem der Ansprüche 1 bis 10.

## Claims

1. Use of an expanded metal mesh (4), with a number of apertures (24) formed between webs (22), solely as a static mixer and flow straightener in the flow duct (2) of an emission control system of an internal combustion engine operated with air excess.

2. Use according to Claim 1, the free cross section formed by the apertures (24) being 25% to 85% of the cross-sectional area of the flow duct (2).

3. Use according to Claim 1 or 2, the expanded metal mesh (4) being inclined in relation to the transverse direction (20) perpendicular to the longitudinal axis (21) of the flow duct (2), the angle of inclination being 0° ≤ α ≤ 45°.

4. Use according to one of Claims 1 to 3, the ratio of the web width (b) to the web thickness (d) being between 0.5 and 5.

5. Use according to one of Claims 1 to 4, a number of expanded metal meshes (4a to 4c) being assembled in the manner of a multi-ply stack (18).

6. Use according to one of Claims 1 to 5, a number of expanded metal meshes (4) or expanded metal mesh plies (18) being arranged one behind the other, as seen in. the direction of flow of the exhaust gas (A).

7. Use according to Claim 5 or 6, the distance (x) between adjacent plies (4, 18) being smaller than or equal to 5 times the diameter (D) of the flow duct (2).

8. Use according to one of Claims 1 to 7, the expanded metal mesh (4) being arranged upstream of an injection point (19) for a reducing agent (R) of the emission control system, as seen in the direction of flow of the exhaust gas (A).

9. Use according to one of Claims 1 to 7, a first expanded metal mesh (4) being arranged upstream of an injection point (19) for a reducing agent (R) of the emission control system, and a second expanded metal mesh (4) being arranged downstream of the injection point (19) and upstream of an exhaust-gas catalytic converter (12), in each case as seen in the direction of flow of the exhaust gas (A).

10. Use according to one or more of the preceding claims, different expanded metal meshes (4) with dimensions, different from one another, of the apertures (24), of the webs (22) and/or of the nodes (26) being provided in the case of a plurality of plies.

11. Emission control system for an internal combustion engine operated with air excess and having an expanded metal mesh (4) used according to one of Claims 1 to 10.

## Revendications

1. Utilisation d'une grille (4) déployée ayant un certain nombre de mailles (24) formées entre des parties pleines (22) exclusivement comme mélangeur statique et comme élément dirigeant le courant dans le canal (2) d'écoulement d'une installation d'épuration des gaz d'échappement d'un moteur à combustion interne fonctionnant avec un excès d'air.

2. Utilisation suivant la revendication 1, dans laquelle la section transversale libre formée par les mailles (24) représente de 25 % à 85 % de la surface de la section transversale du canal (2) d'écoulement.

3. Utilisation suivant la revendication 1 ou 2, dans laquelle la grille (4) déployée est inclinée par rapport à la direction (20) transversale perpendiculaire à l'axe (21) longitudinal du canal (2) d'écoulement, l'angle d'inclinaison étant de 0° ≤ α ≤ 45°.

4. Utilisation suivant l'une des revendications 1 à 3, dans laquelle le rapport de la largeur (b) des parties pleines à l'épaisseur (d) des parties pleines est compris entre 0,5 et 5.

5. Utilisation suivant l'une des revendications 1 à 4, dans laquelle un certain nombre de grilles (4a à 4c) déployées sont rassemblées à la manière d'un paquet (18) de couches.

6. Utilisation suivant l'une des revendications 1 à 5, dans laquelle un certain nombre de grilles (4) déployées ou de couches (18) de grilles déployées sont disposées l'une derrière l'autre, considéré dans la direction d'écoulement des gaz d'échappement (A).

7. Utilisation suivant la revendication 5 ou 6, dans laquelle la distance (x) entre des couches (4, 18) voisines est inférieure ou égale à 5 fois le diamètre (D) du canal (2) d'écoulement.

8. Utilisation suivant l'une des revendications 1 à 7, dans laquelle la grille (4) déployée est, considérée dans la direction d'écoulement des gaz d'échappement (A), montée en amont d'un point (19) d'injection d'un agent (R) réducteur de l'installation d'épuration des gaz d'échappement.

9. Utilisation suivant l'une des revendications 1 à 7, dans laquelle, considéré dans la direction d'écoulement des gaz d'échappement (A), il est prévu une première grille (4) déployée en amont d'un point (19) d'injection d'un agent (R) réducteur de l'installation d'épuration des gaz et en ce qu'il est prévu une deuxième grille (4) déployée en aval du point (19) d'injection et en amont d'un pot catalytique (12) pour les gaz d'échappement.

10. Utilisation suivant l'une ou plusieurs des revendications précédentes, dans laquelle
dans le cas de plusieurs couches il est prévu des grilles (4) déployées différentes ayant des dimensions des mailles (24), des parties pleines (22) et/ou des noeuds (26) qui sont différentes les unes des autres.

11. Installation d'épuration des gaz d'échappement pour un moteur à combustion interne fonctionnant avec un excès d'air, comprenant une grille (4) déployée utilisée suivant l'une des revendications 1 à 10.
